(19) Europäisches Patentamt
European Patent Office
Office européen des brevets

(11) EP 0 735 408 B1

(12) EUROPEAN PATENT SPECIFICATION

(45) Date of publication and mention of the grant of the patent:
**26.07.2000 Bulletin 2000/30**

(51) Int Cl.[7]: **G02F 1/155**, G02F 1/15

(21) Application number: **96109838.1**

(22) Date of filing: **18.12.1991**

# (54) Solid-state electrochromic device

Elektrochrome Festkörpervorrichtung

Dispositif électrochromique à l'état solide

(84) Designated Contracting States:
**DE FR GB IT SE**

(30) Priority: **26.12.1990 US 633870**
**26.12.1990 US 633893**
**26.12.1990 US 633894**
**26.12.1990 US 633895**

(43) Date of publication of application:
**02.10.1996 Bulletin 1996/40**

(62) Document number(s) of the earlier application(s) in accordance with Art. 76 EPC:
**91121683.6 / 0 492 387**

(73) Proprietor: **PPG Industries Ohio, Inc.**
**Cleveland, OH 44111 (US)**

(72) Inventors:
- **Ho,Kuo-Chuan**
  **Tainan,701 ROC (TW)**
- **Rukavina, Thomas George**
  **Lower Burrell, Pennsylvania 15068 (US)**
- **Spindler,Ralph Erwin**
  **Midland, Michigan 48642 (US)**

(74) Representative: **Fleischer, Holm Herbert, Dr. et al**
**Sternagel, Fleischer, Godemeyer & Partner**
**Patentanwälte**
**Braunsberger Feld 29**
**51429 Bergisch Gladbach (DE)**

(56) References cited:
**EP-A- 0 017 977** **EP-A- 0 038 165**
**US-A- 4 082 551** **US-A- 4 768 865**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND OF THE INVENTION

The invention relates generally to the field of electrochromic devices which vary in transmittance in response to an electric field, and more particularly to the art of solid-state electrochromic devices which incorporate polymeric electrolytes.

Electrochromic devices have been proposed for use in alpha-numeric display panels in items such as digital watches, calculators and the like. The electrochromic image formed by the application of an appropriate voltage to an electrochromic cell persists for a useful period after the activating voltage is discontinued, generally until it is erased by application of an appropriate voltage of reversed polarity.

Conventional electrochromic cells comprise a thin film of a persistent electrochromic material, i.e. a material responsive to the application of an electric field of a given polarity to change from a high-transmittance, non-absorbing state to a lower-transmittance, absorbing or reflecting state and remaining in the lower-transmittance state after the electric field is discontinued, preferably until an electric field of reversed polarity is applied to return the material to the high-transmittance state. The electrochromic film is in ion-conductive contact, preferably direct physical contact, with a layer of ion-conductive material. The ion-conductive material may be solid, liquid or gel, preferably a polymer layer. The electrochromic film and ion-conductive layers are disposed between two electrodes.

As a voltage is applied across the two electrodes, ions are conducted through the ion-conducting layer. When the electrode adjacent to the electrochromic film is the cathode, application of an electric field causes darkening of the film. Reversing the polarity causes reversal of the electrochromic properties, and the film reverts to its high transmittance state. Typically, the electrochromic film, e.g. tungsten oxide, is deposited on a glass substrate coated with an electroconductive film such as tin oxide to form one electrode. The counter electrode of the prior art has typically been a carbon-paper structure backed by a similar tin oxide coated glass substrate or a metal plate.

While this conventional electrochromic device structure might be acceptable for data displays in items such as digital watches, it is not suitable for large transparent articles such as windows. While the opaque carbon-paper counter electrode may be replaced with a thin conductive film such as tin oxide, indium oxide or gold, these thin film electrodes encounter lateral electrical resistance which decreases the speed and uniformity of charge distribution as the surface area of the device increases. More importantly, with electric fields of about 1 volt, half-cell reactions which result in the evolution of gas from the electrolysis of water occur at the counter electrode, depending on the polarity, as follows:

| Electrode | Reaction | Standard Potential |
|---|---|---|
| Cathode | $2H_2O + 2e^- \rightarrow H_2 + 2OH^-$ | -0.828 volts |
| Anode | $2H_2O \rightarrow 4H^+ + O_2 + 4e^-$ | -1.229 volts |

The hydrogen and oxygen gases produced by these reactions form bubbles which impair the optical properties of an electrochromic cell for use as a window.

The use of a metal mesh as the counter electrode is described in U.S. Patent No. 4,768,865. The invention described therein allows transparency while providing uniform rapid charge distribution over a large surface area and participating in a balancing half-cell reaction at a lower potential which prevents electrolysis of water and concurrent gas evolution which would otherwise occur according to the following reactions, wherein x is typically up to about 0.5:

COLORATION

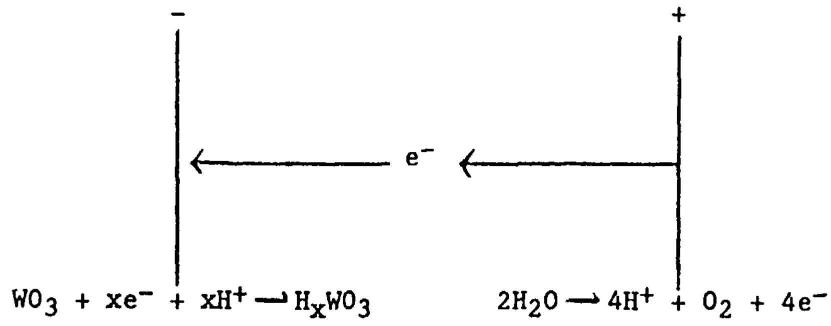


BLEACHING

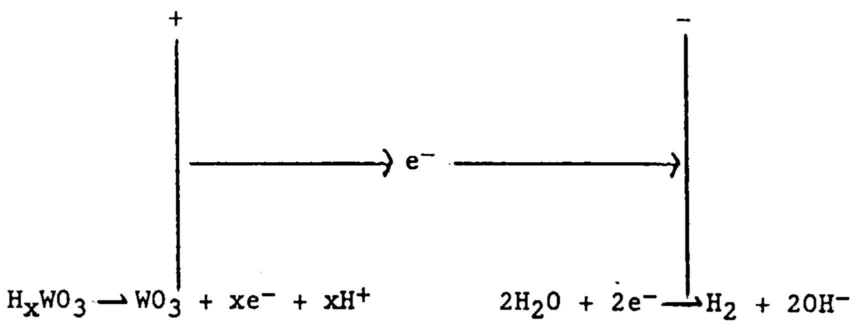


Instead of the hydrolysis of water at the counter electrode, pictured on the right above, the balancing half-cell reaction in response to the electrochromic transition of tungsten oxide is the oxidation or reduction of the metal of the metal grid counter electrode, which does not produce gas which can form bubbles and decrease the optical quality of the device.

Many polymers have been tested for use as polyelectrolytes in electrochromic transparencies. The most successful polymers were based on acrylamidomethylpropanesulfonic acid (AMPS) monomer. These polymers will hydrolyze at elevated temperatures into polyacrylic acid and dimethyltaurine, which is a zwitterion that has very low solubility in water. It will precipitate out of the polymer with time and a sheet of poly (AMPS) will become completely opaque at 90°C in 5 days. Copolymers have been prepared from AMPS and vinyl sulfonic acid monomers. These copolymers are also unstable and will degrade by hydrolysis and oxidation, becoming grossly discolored and opaque with time at elevated temperatures. Copolymers have also been prepared from hydroxyethylacrylate and AMPS monomers. These copolymers will hydrolyze and dehydrate to form alkenes. Polystyrenesulfonic acid (PSSA) has also been tested for use as a polymer electrolyte. This polymer is unstable to oxidation because of the presence of benzylic hydrogens. Upon heating, the polymer forms low molecular weight ketones, diketones, and quinones.

## SUMMARY OF THE INVENTION

The present invention provides an electrochromic device as defined in claims 1 and 3, with rapid electrochromic switching by using a complementary configuration so that the device can operate at low applied voltage without undergoing undesirable reactions which form bubbles, thus being suitable for repeated cycling use such as a window or mirror. The solid-state electrochromic device of the present invention includes a tungsten oxide-Prussian blue couple, which can achieve a deep switching cycle without forming bubbles, in combination with a solid polymer proton-conducting electrolyte. This configuration allows both electrochromic layers to color and bleach simultaneously.

A stable proton-conducting copolymer electrolyte for use in the electrochromic cell of the invention comprises the reaction product of:

a. a first monomer selected from the group consisting of vinyl sulfonic acid, sodium vinyl sulfonate and vinylsulfonylfluoride; and

b. a second monomer selected from the group consisting of vinylpyrrolidinone, butylvinylether, ethervinylether,

isopropylvinylether, cyclohexylvinylether and isobutylene, preferably the reaction product of sodium vinyl sulfonate and N-vinyl-2-pyrrolidinone.

Another suitable proton-conducting polymer electrolyte can be prepared by copolymerizing sodium vinyl sulfonate with N-vinyl-2-pyrrolidinone and sodium styrene sulfonate to form a terpolymer. Both the binary and ternary copolymers are stable upon heating, and do not discolor readily as do vinyl sulfonate homopolymers. In addition, these copolymers can be synthesized by free-radical polymerization, in contrast to the homopolymerization reaction which requires ultraviolet radiation.

Alternative transparent complementary counterelectrodes using films such as indium(III)hexacyanoferrate(II), gadolinium(III)hexacyanoferrate(II) and gallium(III)hexacyanoferrate(II) are also provided. Such films are produced by electroplating onto a conductive surface such as a tin oxide coated glass substrate for use as a transparent complementary counterelectrode, particularly in an electrochromic device comprising a tungsten oxide working electrode and a proton-conducting polymer electrolyte.

The present invention also provides an electrochromic cell which is transparent, and which darkens and bleaches completely at an applied electrical potential of less than 1.0 volt, positive and negative respectively, by means of a conductive metallic mesh counter electrode which allows transparency while insuring uniform rapid charge distribution over a large surface area and participating in a balancing half-cell reaction at a sufficient low potential to prevent electrolysis of water and concurrent gas evolution which occur at a higher voltage in the absence of the metal grid. The metal grid is contacted with a copolymer of acrylamidopropane sulfonic acid and acrylic acid to promote adhesion with an acidic polymer electrolyte. The copolymer of the present invention may also be used as the polymer electrolyte.

## DESCRIPTION OF THE DRAWINGS

Figure 1 illustrates an electrochromic device comprising two transparent substrates 10, a transparent conductor 12, an electrochromic material 13, an electrolyte 14, a complementary electrochromic material 15, and a transparent conductor 16.

Figure 2 illustrates the first three cycles of transmittance and current during cyclic potentiostatic switching of an electrochromic device.

Figure 3 illustrates the initial optical density change at 550 nm against the charge injected/extracted per unit area of an electrochromic device.

Figure 4 shows the transmittance variation at 550 nm and passed charge over 20,000 cycles of an electrochromic device.

Figure 5 illustrates a metal grid useful as an electrode member in accordance with the present invention.

Figure 6 illustrates the switching data for an electrochromic cell comprising a tungsten oxide electrochromic film, a poly(2-acrylamido-2-methylpropane sulfonic acid) electrolyte and an indium hexacyanoferrate complementary counterelectrode.

Figure 7 illustrates the transmittance at 550 nanometers of an electrochromic transparency as a function of time over the course of darkening and bleaching cycles.

## DESCRIPTION OF PREFERRED EMBODIMENTS

In preferred embodiments of the present invention, the electrochromic cell is a transparent laminate comprising two transparent glass substrates. One electrode of the cell comprises one of the glass substrates coated with an electroconductive film, preferably tin oxide having a resistivity of about 25 ohms per square or less. The electrochromic film, preferably tungsten oxide, is deposited over the conductive film, preferably by evaporation or sputtering to a preferred thickness of about 1000 to 4000 Angstroms.

In one preferred embodiment, the second glass substrate is preferably uncoated glass. To form the counter electrode, a metal grid is disposed adjacent to the second glass substrate. A preferred metal for the grid is copper. For optimum optical properties, the copper grid preferably has line widths on the order of (0.0025 inch) about 0.0635 millimeter and line spacing of (about 20 lines per inch) about 8 lines per centimeter. The metal grid pattern may be square or rectangular, but is preferably a pattern of interconnected circles for optimum optical properties as disclosed in U.S. Patent No. 4,772,760, preferably produced by electroforming. The electrochromic film/conductive film coated glass plate and the uncoated glass plate with adjacent metal grid counter electrode are preferably spaced (about 0.030 inch) about 0.76 millimeter apart. Disposed in this space may be an ion-conductive polymer as known in the art, such as homopolymers of 2-acrylamido-2-methylpropane sulfonic acid (AMPS) and copolymers of AMPS with vinyl sulfonic acid. Preferably, the metal grid counter electrode is embedded in the ion-conductive polymer at the interface of the polymer and the uncoated glass substrate. Electrical connections to the electrochromic film are preferably made by means of a bus bar, while connections to the metal grid counter electrode are preferably made directly. To improve the

adhesion between the metal grid and an acidic polymer electrolyte in accordance with the present invention, the metal grid is coated with a primer comprising a copolymer of acrylamidopropane sulfonic acid and acrylic acid, preferably in a molar ratio of about 3:1. The copolymer is prepared by free radical polymerization, and applied to the grid from solution. After the solvent is evaporated, the primed grid is preferably equilibrated at 58 to 62 relative humidity prior to lamination to a polymer electrolyte. The acrylamidopropane sulfonic acid/acrylic acid copolymer of the present invention may itself be the polymer electrolyte.

Polyvinylsulfonic acid (PVSA) would be a highly desirable polymer for use in electrochromic devices in terms of its high conductivity over a wide temperature range. However, the use of this polymer in electrochromic devices has been precluded because of its poor oxidative stability at elevated temperatures. The monomer, vinyl sulfonic acid (VSA) or sodium vinyl sulfonate (SVSA), from which the polymer is prepared has the lowest equivalent weight (108 grams/mol) of any sulfonic acid functional monomer known. The conductivity of the polymer ranges from 0.001 to 0.1 $ohm^{-1}cm^{-1}$ depending on the water content and the temperature. This conductivity is actually higher than is normally required in an electrochromic cell, and therefore advantageous. However, polyvinylsulfonic acid grossly discolors upon heating, and eventually turns black in a short period of time. Spectroscopic analysis has indicated that this discoloration is caused by conjugation in the polymer. A way of utilizing the desirable low equivalent weight of polyvinylsulfonic acid while eliminating the gross discoloration at elevated temperatures has been developed in accordance with the present invention by copolymerizing vinyl sulfonic acid or its sodium salt with monomers that yield strongly alternating copolymers. Using the Q-e scheme, where Q is the resonance stability, e is the polarity and k is the rate constant, and the Q and e values for the monomers, the reactivity ratios and $r_1r_2$ can be calculated:

$$r_1r_2 = e^{-(e_1-e_2)2}$$

where

$$r_1 = k_{11}/k_{12} = Q_1/Q_2 \exp^{\{-e_1(e_1-e_2)\}}$$

If $r_1r_2 = 0$, the copolymer will be alternating. If $r_1r_2 = 1$ the polymer will be a random copolymer, and if $r_1r_2 > 1$ the polymer will be a block copolymer. Thus, the closer $r_1r_2$ is to zero, the stronger the alternating tendency. Thus, the following monomers have been selected to form alternating copolymers with sodium vinyl sulfonate:

| Monomer | Comonomer | $r_1r_2$ |
|---|---|---|
| N-vinyl-2-pyrrolidinone | sodium VSA | .064 |
| t-butylvinylether | sodium VSA | .068 |
| butylvinylether | sodium VSA | .205 |
| ethylvinylether | sodium VSA | .220 |
| isopropylvinylether | sodium VSA | .154 |
| cyclohexylvinylether | sodium VSA | .075 |
| isobutylene | sodium VSA | .350 |

If the sulfonyl fluoride derivative of vinylsulfonic acid

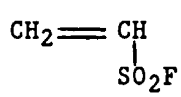

is used as a comonomer, the resulting copolymers will be even more strongly alternating. The sulfonyl fluoride group can be converted to a sulfonic acid group after copolymerization. Ethenesulfonyl fluoride can be prepared by reacting an excess of potassium fluoride with chloroethanesulfonyl- chloride. The following table lists the $r_1r_2$ values for various monomers reacted with vinylsulfonylfluoride:

| Monomer | Comonomer | $r_1r_2$ |
|---|---|---|
| vinyl pyrrolidinone | ethenesulfonylfluoride | $1.35 \times 10^{-4}$ |

(continued)

| Monomer | Comonomer | $r_1r_2$ |
|---|---|---|
| t-butylvinylether | ethenesulfonylfluoride | $1.5 \times 10^{-4}$ |
| butylvinylether | ethenesulfonylfluoride | $1.27 \times 10^{-3}$ |
| ethylvinylether | ethenesulfonylfluoride | $1.46 \times 10^{-3}$ |
| isopropylvinylether | ethenesulfonylfluoride | $6.98 \times 10^{-4}$ |
| cyclohexylvinylether | ethenesulfonylfluoride | $1.8 \times 10^{-4}$ |
| isobutylene | ethenesulfonylfluoride | $4.1 \times 10^{-3}$ |

As an example of the stability of these copolymers, a 2.0/1.0 (mole ratio) copolymer of vinyl sulfonic acid and vinylpyrrolidinone prepared as a (12 mil) 0.3 millimeter sheet is laminated between two pieces of glass, sealed, and exposed to 90°C for 1000 hours. The original luminous transmission was 87 percent. After 1000 hours at 90°C, it drops to 73 percent. A 2.0/1.0 (mole ratio) blend of poly N-vinyl-2-pyrrolidinone and polyvinylsulfonic acid is also made into a 0.3 mm (12 mil) thick sheet and laminated between glass. After 24 hours at 90°C, the light transmission drops to 49 percent. After 1000 hours, the light transmission remains at 49 percent. The stability of the pyrrolidinone ring to acids is excellent, and there is no evidence of ring opening in the copolymers.

These copolymers can be used as polyelectrolytes for electrochromic transparencies. The conductivities range from $10^{-3}$ to $10^{-5}$ $ohm^{-1}cm^{-1}$. They also can be used as primers for adhering perfluorinated sulfonic acid polymers such as Nafion™ to electrochromic films such as tungsten oxide and Prussian Blue.

The vinylsulfonic acid/vinyl pyrrolidinone copolymers do not cause dissolution of tungsten oxide even at temperatures as high as 90°C. They can be cast into thermoplastic sheets and used as interlayers between coated glass plies. The laminates made with these polymers can be fabricated by conventional autoclave techniques.

Preferred proton-conductive copolymers are binary copolymers of vinylsulfonic acid/vinyl pyrrolidinone, and ternary copolymers of vinyl pyrrolidinone with sodium vinyl sulfonate and sodium styrene sulfonate. Preferably, the metal grid counter electrode is embedded in the proton-conductive polymer at the interface of the polymer and the uncoated glass substrate. Electrical connections to the electrochromic film are preferably made by means of a bus bar, while connections to the metal grid counter electrode are preferably made directly.

The cell voltage in accordance with the present invention is sufficiently low so that the following electrolysis reactions of water, with concurrent evolution of gas which can form bubbles, do not occur:

| Electrode | Reaction | Standard Potential |
|---|---|---|
| Anode | $2H_2O \quad 4H^+ + O_2 + 4e^-$ | -1.229 volts |
| Cathode | $2H_2O + 2e^- \rightarrow H_2 + 2OH^-$ | -0.828 volt |

Instead, the metal grid counter electrode participates in balancing half-cell reactions at lower absolute potentials. For a copper grid counter electrode, the following balancing half-cell reactions occur instead:

| Electrode | Reaction | Standard Potential |
|---|---|---|
| Anode | $Cu \rightarrow Cu^+ + e^-$ | -0.521 volt |
| | $Cu^+ \rightarrow Cu^{++} + e^-$ | -0.153 volt |
| Cathode | $Cu^{++} + e^- \rightarrow Cu^+$ | 0.153 volt |
| | $Cu^+ + e^- \rightarrow Cu$ | 0.521 volt |

In other preferred embodiments of the present invention, the second glass substrate is preferably also coated with a conductive film, preferably tin oxide. The complementary electrochromic film, preferably Prussian blue, is deposited on the conductive film, preferably by a sacrificial anode deposition method, to a preferred thickness of 1500 to 5000 Angstroms.

The electrochromic film/conductive film coated glass plates are preferably spaced about (0.030 inch) about 0.76 millimeter apart. Disposed in this space is an ion-conductive material, a proton-conductive polymer in accordance with the present invention. Preferred proton-conductive polymers include homopolymers of 2-acrylamido-2-methylpropane sulfonic acid and copolymers of vinyl sulfonic acid and vinylpyrrolidone as well as poly(styrene-sulfonic acid),

polyvinyl sulfonic acid and Nafion® fluorinated copolymers.

The cell voltage in accordance with the present invention is sufficiently low so that the following electrolysis reactions of water, with concurrent evolution of gas which can form bubbles, do not occur:

| Electrode | Reaction | Standard Potential |
|---|---|---|
| Anode | $2H_2O \rightarrow 4H^+ + O_2 + 4e^-$ | -1.229 volts |
| Cathode | $2H_2O + 2e^- \rightarrow H_2 + 2OH^-$ | -0.828 volt |

Instead, the Prussian blue counter electrode participates in a balancing half-cell reaction as follows:

$$Fe^{III}_4[Fe^{II}(CN)_6]_3 + 4M^+ + 4e^- \underset{ox}{\overset{Red}{\rightleftharpoons}} M_4Fe^{II}_4[Fe^{II}(CN)_6]_3$$

where $M^+$ can be $Li^+$, $Na^+$, $K^+$ or $Cs^+$ ions. In the present invention, $M^+$ may include $H^+$. It is generally known that $H^+$ possesses the highest mobility among various single valency cations. However, incompatibility of proton with Prussian blue has been widely shown previously in solution, and compatibility has not been demonstrated in solid state. The compatibility of Prussian blue with protons in the solid state is essential to the present invention. This compatibility opens up a range of intriguing possibilities in electrochromic technology.

A tin oxide coated glass having a sheet resistance of 25 ohms/square (NESA® coated glass, a product of PPG Industries, Inc.) is used as a working electrode. The tin oxide coated glass substrates (5.1 x 7.6 x 0.5 $cm^3$ and 12.5 x 17.8 x 0.5 $cm^3$) are precleaned ultrasonically for 15 minutes in an aqueous solution of Dart 210 cleaner from Madison Chemical Co. The actual cleaning solution is prepared from concentrate diluted with distilled water to pH = 3.0. During ultrasonic cleaning, the bath is heated to a temperature of 60°C. After cleaning, the substrate is rinsed with distilled water and then dried with extra dry $N_2$ gas.

Tungsten oxide films are prepared by resistive evaporation beginning at $6 \times 10^{-6}$ Torr. The source material is $WO_3$ powder (purity > 99.9 percent, Li Tungsten Corporation) contained in an $Al_2O_3$-coated tungsten boat. In advance, the substrate is precleaned by argon ion sputtering. No substrate preheating is provided. The thickness of the $WO_{3-y} \cdot mH_2O$ film is controlled with a quartz crystal monitor at 3700 ± 500Å. Film thickness control is based on multiple beam interferometry, using an Å-scope (Ångstrom Technology). X-ray diffraction analysis, with a Rigaku diffractometer (Model D-2655) using a monochromatized Cu K alpha incident radiation, shows all the films to be lacking crystallinity. Conductive copper bus bars are applied on two sides of the tungsten oxide coated surface.

Two methods may be used to form Prussian blue on conducting glass. For a small cell, the electrodeposition method described in the prior art may be used. The solution contains 5.0 mM of $FeCl_3 \cdot 6H_2O$ and 5.0 mM of $K_3Fe(CN)_6$. It takes about 5 minutes to deposit Prussian blue on the NESA glass. However, this electrochemical method is not suitable for forming Prussian blue films over a large area because of the nonuniform film thickness which accompanies the potential drop across the conducting substrate. The uniform electroless deposition method to overcome this drawback disclosed by Yano et al. usually takes about 4-5 hours to grow the same amount of Prussian blue as formed by the electrodeposition method. The electroless method is improved in accordance with the present invention to accelerate the deposition rate, so that coating time is comparable to that of the electrodeposition method. The solution used in the modified deposition of the present invention contains 5.0 mM of $FeCl_3 \cdot 6H_2O$, 5.0 mM of $K_3Fe(CN)_6$ and 2.5 mM of $H_3PO_2$. The modified method incorporates a conducting bus bar system on a conducting glass substrate during substrate immersion, which facilitates the deposition rate through an instantaneous redox reaction. This rapid deposition takes only about 10 minutes to form Prussian blue. The thickness of the Prussian blue film, preferably 1,500 to 5,000Å, is controlled by the dipping time. X-ray diffraction analysis, with a Rigaku diffractometer (Model D-2655) using a monochromatized Cu K alpha incident radiation, shows all the films to be crystalline.

A preferred transparent electrolyte is poly(2-acrylamido-2-methylpropane sulfonic acid) produced by the electrolyte polymerization procedures described in U.S. Patent No. 4,375,318. Ion conductivity of the polymer electrolyte at room temperature is estimated to be approximately $10^{-3}$ $ohms^{-1}$ $cm^{-1}$. Preferred ion-conducting polymer sheets are described in copending U.S. Application Serial No. 07/440,832 filed November 24, 1989, by Rukavina et al.

A homopolymer of 2-acrylamido-2-methylpropane sulfonic acid is made by adding 65.51 grams of AMPS® monomer (Lubrizol Corporation), 70.00 grams of deionized water and 0.49 gram of tetraethylene glycol diacrylate (Sartomer Co.) to a flask equipped with a magnetic stirrer. The mixture is evacuated at 686mm (27 inches) of mercury for 15 minutes. Immediately after, a 0.12 gram of 20 percent benzoin methyl ether (Polysciences, Inc.) is added and

mixed thoroughly. During the course of mixing, the flask is again under vacuum and maintained at 686mm (27 inches) of mercury. Nitrogen gas is introduced to the flask at the end of mixing to release vacuum. The monomer mixture is cast between two release plies of plastic film in a glass mold. A cure is accomplished by exposing each side to UV lamps. The peak of the UV spectrum is 360-390 nanometers. Exposure at the glass casting cell per side during horizontal travel under UV lamps averages 3500 ± 200 mJ/$cm^2$. Each side is exposed for 3 minutes. After removing the sheet from its glass-supported casting mold, one release layer is stripped away to begin conditioning. Conditioning is done in a room with controlled relative humidity of approximately 58 percent at room temperature, which is 23°C. Once the sheet is sufficiently dry (tack-free), the remaining release layer is also peeled away. The freestanding polymer sheet is then allowed to equilibrate to the desired water content, which is 3.50 molar ratio of water to AMPS monomer. This corresponds to ionic conductivity of about $10^{-3}$ $ohms^{-1}$ $cm^{-1}$ at room temperature. Before assembling the cell, the tungsten oxide electrode is precharged with protons. The precharging is carried out in an acidic solution containing 0.1 N HCl. Constant current of 0.1 mA/$cm^2$ is used in charging or cathodizing the tungsten oxide electrode. It takes about 4 minutes to get the proper amount of protons into the tungsten oxide thin film. The blue tungsten bronze, $H_xWO_{3-y}$, is then rinsed with the distilled water and dried under $N_2$. Prussian blue and $H_xWO_{3-y}$ electrodes are laminated with a proton conducting polymer electrolyte.

The working and counter electrodes are laminated together with a layer of proton-conducting polymer electrolyte. The polymer electrolyte is cast at (30 mils) about 0.76 millimeter. There is about 15 percent shrinkage upon conditioning. The lamination process is carried out in an autoclave at a pressure of about 1MPa (150 pounds per square inch) and a temperature of 93°C for one hour.

The coloration and bleaching of the cell are carried out by applying a constant dc voltage using, for example, a Keithley Voltage/Current Source, Model 228A. The transmittance, current and drift of the cell voltage are recorded. The change in optical transmittance during coloration and bleaching is measured at 550 nm with a Cary-14 spectrophotometer, thus confirming the compatibility of a proton-conducting polymer electrolyte with Prussian blue.

Another objective of the present invention is to provide alternatives to Prussian blue (PB) for use in electrochromic cells with proton-conducting polymer electrolytes. Although PB has several advantages as a complementary electrode such as fast optical response, and a good match for the color of $WO_3$, it also has some limitations. Among the limitations are poor stability in the bleached state and thermal bleaching at temperatures above about 50°C. Another limitation is an optical mismatch that can occur in a complementary electrochromic cell where the optimum bleached or darkened state cannot be attained because of an electrochemical imbalance in the cell which results in residual coloration. Further, Prussian blue requires the cathodically darkening electrode to be precharged before construction of an electrochromic cell.

A feature of the present invention is to substitute the $M^1$ ion in the PB structure $[M^1]_4[Fe(CN)_6]_3$ with other metal ions to influence the stability of PB while still maintaining its utility as a counter electrode in a $WO_3$-based electrochromic device with a proton-conducting polymer electrolyte. Substituting $In^{+3}$, it is found that indium(III)hexacyanoferrate(II), InHCF, is electrochemically stable in aqueous $KNO_3$ solution. InHCF is clear in the bleached state and light yellow in the reduced state. The low coloration efficiency of InHCF has an advantage, since the bleached state of an electrochromic cell derived from $WO_3$ and InHCF is not limited by the capacity of InHCF, as is seen with PB. A second advantage of InHCF is that in cells using $WO_3$ and InHCF, the $WO_3$ does not have to be precharged to form an electrochemically balanced system. $In^{+3}$ is not the only trivalent metal ion that can be substituted into the PB structure to produce a transparent counterelectrode. Gallium, gadolinium and other metal ions with only one accessible redox state may form a transparent film which may be used as a transparent counterelectrode.

## EXAMPLE 1

A transparent electrochromic cell is prepared using two glass cell members. Both glass substrates are clear 3 millimeter thick float glass coated with a tin oxide film having a resistivity of 25 ohms per square. The conductive tin oxide coated glass member functions as an electrode, with a silver frit bus bar applied about the periphery. An electrochromic tungsten oxide film $WO_{3-y}\cdot mH_2O$, wherein m represents the extent of hydration and y represents oxygen deficiency, is deposited over one conductive tin oxide film by resistive evaporation at an initial vacuum chamber pressure of about 4 x $10^{-6}$ Torr. The electrochromic tungsten oxide film is deposited to a thickness of about 4000 Angstroms. A film of Prussian blue is deposited on the other tin oxide coated glass substrate by electrochemical deposition.

On the scale of a 3.5 cm X 4.0 cm viewing area, electrochemical stability of at least 20,000 cycles at room temperature is achieved, with cycling at ±1.0 and ±1.5 volts. The initial transmittance at 550 nm during bleaching goes from 8 percent to 52 percent in about 30 seconds; decreasing from 52 percent to 8 percent during darkening in about 15 seconds. This rapid electrochromic switching is accomplished by using a proton-precharged tungsten oxide ($H_xWO_3$)-Prussian blue couple and a proton-conducting polyAMPS electrolyte with molar ratio of water to AMPS monomer of 3.50. The device achieves a deep switching without forming bubbles under repeated cycling. This electrochromic transparency, of electrically conductive glass/$H_xWO_{3-y}\cdot mH_2O$/solid polymer electrolyte/Prussian blue/electrically

conductive glass, hereafter referred as $H_xWO_{3-y}$/Poly-AMPS/PB, is based on complementary electrochemistry.

The above described cell develops residual color (discoloration) at the end of 1,000 continuous cycles with ±1.0 volt powering. Discoloration becomes very evident at the end of 5,140 cycles. Nevertheless, the drop in the bleached state transmittance is fully recovered by applying a higher voltage (±1.5 volts). Another sample is fabricated with a modified Prussian blue electrode by incorporating Prussian blue into a porous sol-gel coating on conducting glass. The sol-gel is prepared according to U.S. Patent No. 3,941,719 to Yoldas, and is spin-coated on the conducting glass at 2000 rpm for 30 seconds. This also shows discoloration, after 6,090 continuous cycles with ±1.0 volt powering. Again, the loss in the bleached state transmittance is fully recovered by applying a higher voltage (±1.5 volts). The sol-gel coating improves the life expectancy of the device, possibly because the sol-gel coating improves adhesion between Prussian blue and the conductive glass.

EXAMPLE 2

For a large electrochromic device with the scale of a 11.5 cm X 15.5 cm viewing area (active area = 180 $cm^2$), the electrochemical film deposition method is not suitable for forming Prussian blue films. Electrochromic windows based on tungsten oxide/Prussian blue are scaled up to a 12.6cm x 17.8cm (5 inch X 7 inch) size (active area = 180 $cm^2$). Prussian blue is deposited on tin oxide coated glass (Sungate® 300 glass from PPG Industries) by using the modified sacrificial anode method with the reducing agent. The Prussian blue electrode is rinsed with the distilled water and dried with nitrogen before use. The tungsten oxide thin film is coated on tin oxide coated substrate (NESA glass from PPG Industries) by vacuum deposition. An electrochromic cell is constructed as in Example 1.

Cells all switch at low voltage (±0.7 volt) within one minute both in the darkening and bleaching cycles. The transmittance and current during cyclic potentiostatic switching is presented in Figure 2 for an active area of 180 $cm^2$ for the first three cycles. The voltage is the potential difference between the Prussian blue electrode and the tungsten oxide electrode, and is +0.7 volt for darkening and -0.7 volt for bleaching. The transmittance at 550 nm during bleaching goes from 5 percent to 55 percent in about 1 minute, and decreases from 55 percent to 5 percent during darkening in about 45 seconds.

EXAMPLE 3

Stabilization of the performance of the cell at room temperature is achieved with a third electrode, a platinum wire, by refreshing and preventing the drift of the bleached state transmittance. The performance can be stabilized for at least 10,000 cycles at room temperature with an alternating cycling/refreshing operation. This is done by intermittently charging the Prussian blue and platinum electrode following periods of cycling. The rejuvenating process requires a sustained bias of 2.0 VDC between the platinum and Prussian blue electrode. A comparison of the transmittance change at 550 nm for cells made without and with a third electrode is summarized below.

Effect of Refreshing on Switching

| | Room Temp. Switching (% Transmittance at 550 nm) | | |
|---|---|---|---|
| Configuration/Cycle No. | N = 1 | N = 1,000 | N = 10,000 |
| Without third electrode | 55 ⇄ 4 | 40 ⇄ 6 | 28 ⇄ 9 |
| With third electrode | 58 ⇄ 5 | 56 ⇄ 8 | 55 ⇄ 11 |

EXAMPLE 4

In this example, stabilization of the bleached state transmittance is achieved without using the third electrode. This can be done by forming the Prussian blue electrode with better control of charge capacity to match the $H_xWO_3$ electrode. The capacity of the Prussian blue electrode can be controlled by counting the number of coulombs passing through the electrode during the deposition period. Prussian blue of active area of 180 square centimeters is formed on a tin oxide conducting substrate with 30 ohms per square sheet resistivity. The plating solution contains 20mM of $FeCl_3 \cdot 6H_2O$ and 20mM of $K_3Fe(CN)_6$. Silver wire of 1 millimeter diameter is used as a sacrificial anode to cause the deposition of Prussian blue. The exposed length is 2.54 centimeters. The number of coulombs passed is controlled at 2.00. The process is carried out for about 7 minutes. The electrochromic cell is laminated with proton-conducting poly (2-acrylamido-2-methylpropane sulfonic acid) polymer electrolyte, with molar ratio of water to AMPS monomer of 3.50, in the manner previously described herein.

This cell, with active areas of 180 square centimeters, based on $H_xWO_3$/polymer electrolyte/Prussian blue,

is cycled more than 20,000 cycles at constant voltages and time intervals (darkening: 1.2 volts, 30 seconds, bleaching: -0.6volts, 60 seconds). Figure 3 plots the initial optical density change at 550 nanometers against the charge injected/extracted per unit area at room temperature. The coloration efficiency of the device is calculated from the slope and is 75.8 $cm^2/C$. Figure 4 represents the transmittance variation at 550 nm and passed charge over 20,000 cycles. Initially, the cell transmittance at 550 nm decreases from 55 percent to 3 percent in 30 seconds, bleaches from 3 percent to 55 percent in 60 seconds. The transmittance varies from 59 percent to 20 percent, with the same powering and timing, at the end of 20,000 cycles. Passed charge decreases by 55 percent over the span of 20,000 cycles.

## EXAMPLE 5

A transparent electrochromic cell is prepared using two glass cell members. One glass substrate is clear 3 millimeter thick float glass. The other is 5 millimeter thick float glass coated with a tin oxide film having a resistivity of 25 ohms per square. The conductive tin oxide glass member functions as an electrode, with a silver frit bus bar applied about the periphery. An electrochromic tungsten oxide film, $WO_3 \cdot yH_2O$ wherein y represents the extent of hydration, is deposited over the conductive tin oxide film by resistive evaporation at an initial vacuum chamber pressure of about $4 \times 10^{-6}$ Torr. The electrochromic tungsten oxide film is deposited to a thickness of about 4000 Angstroms. The electrochromic film/conductive film coated glass member is positioned parallel with the uncoated glass member at a spacing of (0.030 inch) about 0.76 millimeter utilizing a butyl rubber spacer. Into this sealed cell construction is cast a polymerization reaction mixture comprising 2-acrylamido-2-methylpropane sulfonic acid, water and organic solvent, which is cured to form an ion-conductive polymer film. Imbedded in the polymer, adjacent to the uncoated glass substrate surface, is an electroformed copper square grid with 0.0635mm (0.0025 inch) lines at 8 lines per cm (20 lines per inch) spacing, as illustrated in Figure 5, which functions as a counter electrode and has been precoated with an acrylamidopropane sulfonic acid/acrylic acid copolymer as follows. A solution is prepared comprising 664 grams of acrylamidomethyl-propanesulfonic acid and 72 grams of acrylic acid in 2088 grams of distilled water. In a kettle equipped with an overhead stirrer, the solution is purged with nitrogen for 15 minutes, then degassed for 15 minutes before adding 3.48 grams of azobisisobutyronitrile as initiator. The solution is heated at 70°C for 18 hours to effect polymerization. To the polymer solution is added 3 percent of surfactant, FC-430 from Dupont, and sufficient 95 percent ethanol to reduce the concentration by half. The polymer solution is transferred to a glass tray, and the copper grid is dipped into the polymer solution. The coated grid is dried in a vertical position at ambient temperature for one hour, then heated in an oven at 70°C for 20 minutes, and finally equilabrated at 55 percent relative humidity prior to lamination. The electrochromic cell thus formed has a luminous transmittance of about 70 percent at a wavelength of 550 nanometers. When an electric current is applied across the cell at a superficial current density of about 0.12 milliamps per square centimeter, the electrochromic film darkens to 20 percent transmittance in about 2 minutes. When the polarity is reversed, the electrochromic film returns to its initial transmittance in about 2 minutes.

## EXAMPLE 6

Preparation of a vinylsulfonic acid/N-vinyl-2-pyrrolidinone copolymer having a 3 to 1 molar ratio is carried out as follows. A 25 percent aqueous solution of sodium vinyl sulfonic acid is triple filtered through a 1.2 micron glass fiber/activated carbon filter. An aliquot containing 934.08 grams of the sodium vinyl sulfonic acid solution is concentrated on a rotovac at 35-40°C to 683.41 grams. Into a 2 liter kettle is added 68.48 grams of N-vinyl-2-pyrrolidinone. To this is added the 683.41 grams of sodium vinyl sulfonic acid solution. The monomer solution is mixed and sparged with nitrogen for 30 minutes. A kettle equipped with sparge tube, thermometer, overhead stirrer, and condenser is placed into a 60°C water bath. While stirring, 1.5 grams of azobisisobutyronitrile (AIBN) is added. The polymerization reaction continues for 21 hours. The polymer is precipitated with 2500 grams of methanol and allowed to settle for 1 hour. The polymer is washed with methanol, filtered and dried at 60°C in a vacuum oven. A 10 percent aqueous solution of dried polymer is added to 3091 grams of Amberlite IRA-118H ion exchange resin, stirred for 30 minutes, and vacuum filtered through 1.5 micron glass fiber filter. The solution is freeze dried or vacuum dried to yield the copolymer.

## EXAMPLE 7

This example describes the lamination of glass plies with the copolymer of Example 6. A 10 percent aqueous solution of the above described copolymer is cast into a Teflon coated flat tray and equilibrated at 35 percent relative humidity to a final water content of 1.5 moles water/mole sulfonate group and a thickness of 12 mils. The polymer is then placed between two pieces of glass, vacuum-bagged, and autoclaved at 93.3°C (200°F), 1.38 MPa (200 psi) for one hour. A transparent glass laminate with 88 percent light transmission is prepared in this manner.

EXAMPLE 8

This example describes the lamination of perfluorinated sulfonic acid polymer using the copolymer of Example 6 as a primer. A 7 mil (0.18 millimeter) sheet of Nafion polymer is dipped into a 5 percent solution of the above copolymer in 95 percent ethanol. The solution can also be applied to the glass substrates instead of the Nafion polymer, or both the Nafion polymer and the glass substrates can be coated with the copolymer primer. The laminate is then autoclaved at 121.1°C (250°F), 1.38MPa (200 psi) for 1.5 hours.

EXAMPLE 9

An electrochromic cell measuring (5 inches x 7 inches) 12.7 by 17.8 centimeters is prepared with the copolymer of Example 6 as a primer for Nafion polymer. An electrochromic transparency is fabricated using the method described in Example 8. The polyelectrolyte is conditioned at 35 percent relative humidity. The electrochromic cell darkens from 40 percent to 11 percent light transmission (550 nm) in 30 seconds and back to 40 percent in 10 seconds. Darkening voltage is 0.4V and bleaching voltage is 0.5V. After exposing the cell at 90°C for 3 hours in the darkened state, the cell switches from 45 percent to 13 percent in 30 seconds and back to 45 percent in 10 seconds.

EXAMPLE 10

An electrochromic cell of the same dimensions as Example 9 is prepared with a 4.25/1.0 mole ratio copolymer as interlayer/polyelectrolyte as follows. An electrochromic transparency is fabricated using the method described in Example 7. The polyelectrolyte is conditioned at 30 percent relative humidity. The electrochromic cell darkens from 27 percent to 9 percent in 30 seconds and back to 27 percent in 10 seconds. Darkening voltage is 0.4V and bleaching voltage is 0.5V. After 3 hours at 90°C, the cell switches at room temperature from 30 percent to 11 percent. Darkening time is 30 seconds and bleaching time is 30 seconds.

EXAMPLE 11

The preparation of InHCF is carried out on a conductive tin oxide coated glass substrate. NESA® tin oxide coated glass (a product of PPG Industries, Inc.) is cut to size 13.1cm x 20.3cm 4-3/4" x 8", cleaned ultrasonically in a bath containing Dart 210 detergent for 15 minutes at (150°F) about 65°C, rinsed with deionized $H_2O$, dried with $N_2$, soaked in concentrated $H_2SO_4$ for 5 minutes, and subsequently rinsed in tap water, deionized $H_2O$ and distilled $H_2O$. After drying the substrate, a four sided Cu-tape bus bar is placed around the periphery of the plate, and then the bus bar is protected from the plating solution by Teflon tape. The plating solution comprises 0.02 M of $InCl_3$, 0.02 M of $K_3Fe(CN)_6$, 0.5 M KCl, and 0.01 M HCl. A silver wire connected to the conductive substrate is used as a sacrificial anode to cause the deposition of InHCF. The current and the number of coulombs passed are measured in order to obtain uniform deposition. For the thickness range of InHCF films useful to obtain desired electrochromic activity, the InHCF film is clear in the reduced state and turns light yellow upon electrochemical oxidation. Electrochromic cells may be laminated with various proton-conducting polymer electrolytes.

The deposition rate of InHCF depends on the surface area of the silver wire exposed to the plating solution. The corrosion of Ag by the plating solution causes electrons to flow through the external circuit to the NESA® coated substrate where ferricyanide is reduced to ferrocyanide. An insoluble indium-ferrocyanide complex forms and precipitates onto the NESA® coated electrode. Due to the electronic conductivity of InHCF, the film continues to grow as more electrons are supplied to the substrate. In general, the best films are formed when a relatively thin film is first grown slowly followed by a more rapid deposition until the appropriate number of coulombs have been passed.

Initial testing of an InHCF/$WO_3$ electrochromic design is conducted using cells with the following configuration: NESA®/InHCF(XC)/poly(2-acrylamido-2-methylpropane sulfonic acid)([$H_2O$])/[R-$SO_3$H] = 3.5/l)/$WO_3$/NESA®, where X indicates the coulombs of charge passed during the deposition of InHCF (NESA® is a registered trademark of PPG Industries, Inc.). In order to obtain deep optical switching (550 nm) %T > 45%, at least 41 millicoulombs per square centimeter of charge is passed during the deposition. Cyclic voltammetry of the electrochromic cells suggests a voltage safety limit of -1.45V for the darkening cycle and 0.8V for bleaching. Using $V_d$ = -1.2V and $V_b$ = 0.8V, the cell NESA®/InHCF(9C)/poly(2-acrylamido-2-methylpropane sulfonic acid)/$WO_3$/NESA® requires 120 seconds to change from 68%T to 20%T (2.49C, 550nm) as illustrated in Figure 6, and the bleaching cycle requires 80 seconds to pass an equivalent number of coulombs. The bleaching response is rapid, since 98% of the optical change takes place within the first 20 seconds.

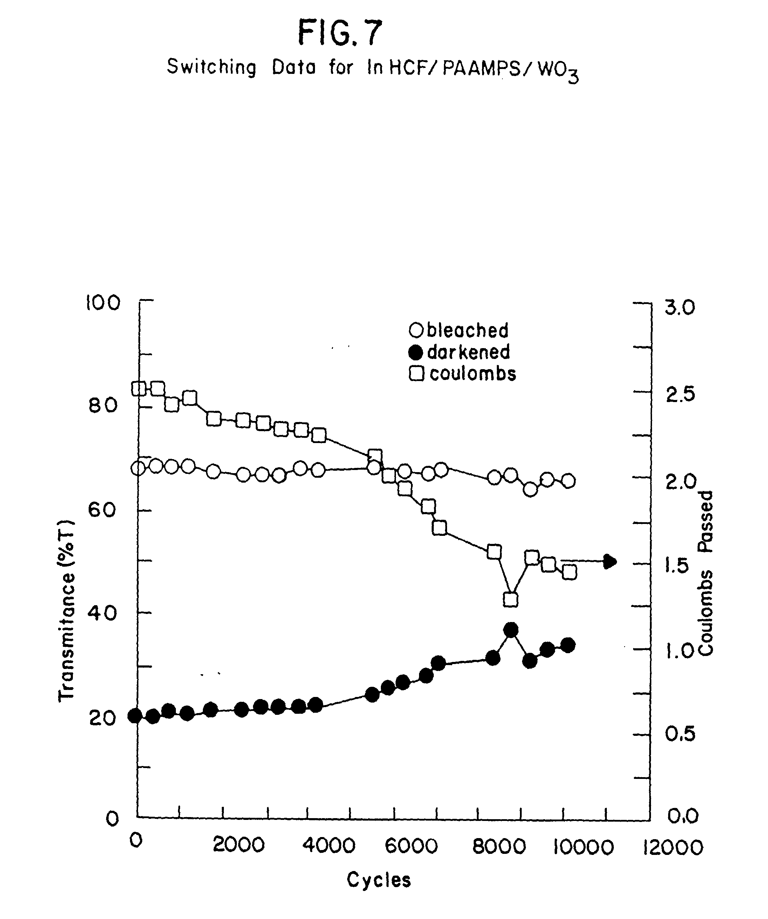

The cycling response of InHCF/$WO_3$ system is stable for somewhere between 3000 and 6000 cycles at which point the darkened state transmittance becomes somewhat higher and the coulombs of charge passed decreases somewhat, as shown in Figure 7. The loss in the cell's optical and charge capacity does not seem to be irreversible,

but rather is a kinetic effect, since if longer darkening times are used, the original characteristics of the cell can be recovered. The time required to completely darken the cell increases as a function of the number of cycles applied to the cell. Electrochromic cells prepared from InHCF, $WO_3$, and a solid proton conducting electrolyte are shown to exhibit reversible electrochromic switching up to 10,000 cycles at room temperature.

EXAMPLE 12

A transparent counter electrode of Gallium(III)hexacyanoferrate(II), GaHCF, is prepared following the procedure of Example 11. In this example $GA(NO_3)_3$ is used in place of $InCl_3$. Using a silver wire sacrificial anode, a clear, adherent film of GaHCF forms upon the conductive substrate. When the GaHCF film is laminated together with $WO_3$ and a solid polymer electrolyte, an electrochromic cell is formed which shows good switching characteristics.

EXAMPLE 13

In this example, $GdCl_3$ is used instead of $InCl_3$ in the plating solution described in Example 11. The plating solution is prepared by dissolving 5.9472 grams $GdCl_3.9H_2O$ and 5.2682 grams $K_3Fe(CN)_6$ in 800 milliliters distilled $H_2O$ to give a solution concentration of 0.02 M for each of the salts. The solution is orange in color. Thin films are deposited as in Example 11. A clear film forms on the conductive substrate by using the sacrificial anode method. Gadolinium(III)hexacyanoferrate(II) shows electrochemical activity, and when coupled with a solid polymer and $WO_3$, produces an electrochromically active transparency.

The Prussian blue structure $[M^1]_4[M^2(CN)_6]_3$ may be modified in accordance with the present invention by replacing $M^1$ with a variety of metal ions such as iron, gallium, ruthenium, aluminum, gadolinium, indium, and some lanthanides, and $M^2$ may be either iron or ruthenium. In the similar structure $[M^1]_2[M^2(CN)_6]$, $M^1$ may be nickel or copper, while $M^2$ may be iron or ruthenium.

The above examples are offered to illustrate the various advantages of features of the present invention.

While some of the above examples utilize a tungsten oxide electrochromic film, other electrochromic material may be employed, such as transition metal oxides, transition metal sulfides, transition metal oxysulfides, transition metal halides, selenides, tellurides, chromates, molybdates, tungstates, vanadates, niobates, tantalates, titanates, stannates, etc., especially oxides, sulfides and stannates of metals of Groups IV-B, V-B and VI-B, and oxides and sulfides of Lanthanide Series metals, particularly, in addition to tungsten oxide, molybdenum oxide, titanium oxide, vanadium oxide, niobium oxide, cerium oxide, copper stannate, cobalt tungstate and various metal molybdates, titanates and niobates. Other electrochromic materials which reverse by short-circuiting or are effective only at elevated temperatures may also be employed.

The ion-conductive layer may be chosen to be permeable to ions other than hydrogen, such as lithium. The metal mesh counter electrode may comprise nickel or other metals or alloys as well as the preferred copper. The metal mesh counter electrode may be coated with another material in order to provide a particularly desired balancing half-cell reaction, i.e. at a potential lower than that of the electrolysis of water, e.g. nickel coated with tungsten oxide or niobium oxide. While electroforming is a preferred method for producing the counter electrode, any method which produces a grid with acceptable optical properties may be employed. The electrode in contact with the electrochromic material may also be in the form of a metal mesh, in which case the grid patterns of the two electrodes may be designed to complement each other or to provide particular optical properties. The substrate members of electrochromic cells may be any suitably transparent material.

The complementary electrochromic material is not limited to Prussian blue or PB analog itself. It can embody a composite material consisting of Prussian blue or PB analog, such as polyaniline-Prussian blue or PB analog composite films and sol-gel Prussian blue or PB analog composite films.

Alternate proton-conducting polymers are disclosed in copending U.S. Application Serial No. 07/440,832 filed November 24, 1989, by Rukavina et al. A laminated and sealed electrochromic window can be produced in accordance with copending U.S. Application Serial No. 07/415,001 filed September 29, 1989, by Greenberg et al.

The scope of the present invention is defined by the following claims.

**Claims**

**1.** An article of manufacture having variable transmittance in response to an electric field comprising:

a. a transparent substrate;
b. an electroconductive electrode member;
c. a transparent electrochromic film in contact with said electroconductive electrode member;

d. an ion-conductive polymer in contact with said electrochromic film; and
e. a metal grid counter electrode in contact with said ion-conductive polymer, characterised in that

a primer coating is deposited on said metal grid, said coating comprising a copolymer of acrylamidopropane sulfonic acid and acrylic acid.

**2.** An article according to claim 1, characterised in that said transparent substrate is glass, said electroconductive electrode member is a transparent film selected from the group consisting of indium oxide, tin oxide and mixtures thereof, said transparent electrochromic film comprises an electrochromic material selected from the group consisting of transition metal oxides, transition metal sulfides, transition metal oxysulfides, transition metal halides, selenides, tellurides, chromates, molybdates, tungstates, vanadates, niobates, tantalates, titanates and stannates, said ion-conductive polymer comprises a copolymer of acrylamidopropane sulfonic acid and acrylic acid, and further comprising a second transparent substrate adjacent to said metal grid counter electrode.

**3.** An article of manufacture having variable transmittance in response to an electric field comprising:

a. a transparent glass substrate;
b. an electroconductive electrode member deposited on said substrate;
c. a transparent electrochromic tungsten oxide film in contact with said electroconductive electrode member;
d. an ion-conductive polymer layer in contact with said electrochromic film; and
e. a copper grid counter electrode in contact with said ion-conductive polymer layer, characterised in that said copper grid counter electrode is coated with a copolymer of acrylamidopropane sulfonic acid and acrylic acid.

## Patentansprüche

**1.** Erzeugnis mit variabler Durchlässigkeit in Abhängigkeit eines elektrischen Felds, umfassend:

a. ein transparentes Substrat,
b. eine elektronenleitfähige Elektrodenvorrichtung,
c. einen transparenten elektrochromen Film in Kontakt mit dieser elektronenleitfähigen Elektrodenvorrichtung,
d. ein ionenleitfähiges Polymer in Kontakt mit diesem elektrochromen Film und
e. eine Metallgittergegenelektrode in Kontakt mit diesem ionenleitfähigen Polymer,

dadurch gekennzeichnet, daß eine Primerbeschichtung auf diesem Metallgitter aufgebracht ist und diese Beschichtung ein Copolymer aus Acrylamidopropansulfonsäure und Acrylsäure enthält.

**2.** Erzeugnis nach Anspruch 1, dadurch gekennzeichnet, daß dieses transparente Substrat Glas ist, diese elektronenleitfähige Elektrodenvorrichtung ein transparenter Film ist, der ausgewählt ist aus der Gruppe bestehend aus Indiumoxid, Zinnoxid und Mischungen davon, dieser transparente elektrochrome Film ein elektrochromes Material enthält, das ausgewählt ist aus der Gruppe bestehend aus Übergangsmetalloxiden, Übergangsmetallsulfiden, Übergangsmetalloxysulfiden, Ubergangsmetallhalogeniden, Seleniden, Telluriden, Chromaten, Molybdaten, Wolframaten, Vanadaten, Niobaten, Tantalaten, Titanaten und Stannaten, dieses ionenleitfähige Polymer ein Copolymer aus Acrylamidopropansulfonsäure und Acrylsäure enthält und dieses Erzeugnis weiterhin ein zweites transparentes Substrat enthält, das benachbart zu dieser Metallgittergegenelektrode ist.

**3.** Erzeugnis mit variabler Durchlässigkeit in Abhängigkeit eines elektrischen Felds, umfassend:

a. ein transparentes Glassubstrat,
b. eine elektronenleitfähige Elektrodenvorrichtung, die auf diesem Substrat aufgebracht ist,
c. einen transparenten elektrochromen Wolframoxidfilm in Kontakt mit dieser elektronenleitfähigen Elektrodenvorrichtung,
d. eine ionenleitfähige Polymerschicht in Kontakt mit diesem elektrochromen Film und
e. eine Kupfergittergegenelektrode in Kontakt mit dieser ionenleitfähigen Polymerschicht,

wobei diese Kupfergittergegenelektrode mit einem Copolymer aus Acrylamidopropansulfonsäure und Acrylsäure beschichtet ist.

## Revendications

1. Article de fabrication ayant une transmission variable en réponse à un champ électrique comprenant :

   a. un substrat transparent;
   b. un élément d'électrode électroconducteur;
   c. un film électrochromique transparent en contact avec ledit élément d'électrode électroconducteur;
   d. un polymère conducteur d'ions en contact avec ledit film électrochromique; et
   e. une contre-électrode en forme de grille métallique en contact avec ledit polymère conducteur d'ions,

   caractérisé en ce qu'un revêtement d'accrochage est déposé sur ladite grille métallique, ledit revêtement comprenant un copolymère d'acide acrylamidopropane sulfonique et d'acide acrylique.

2. Article suivant la revendication 1, caractérisé en ce que le substrat transparent susdit est du verre, l'élément d'électrode électroconducteur susdit est un film transparent choisi dans le groupe comprenant l'oxyde d'indium, l'oxyde d'étain et leurs mélanges, le film électrochromique transparent susdit comprend une matière électrochromique choisie dans le groupe comprenant les oxydes de métaux de transition, les sulfures de métaux de transition, les oxysulfures de métaux de transition, les halogénures de métaux de transition, les séléniures, les tellurures, les chromates, les molybdates, les tungstates, les vanadates, les niobates, les tantalates, les titanates et les stannates, le polymère conducteur d'ions susdit comprend un copolymère d'acide acrylamidopropane sulfonique et d'acide acrylique, et de plus comprenant un second substrat transparent adjacent à la contre-électrode en forme de grille métallique précitée.

3. Article de fabrication ayant une transmission variable en réponse à un champ électrique comprenant :

   a. un substrat de verre transparent;
   b. un élément d'électrode électroconducteur déposé sur ledit substrat;
   c. un film d'oxyde de tungstène électrochromique transparent en contact avec ledit élément d'électrode électroconducteur;
   d. une couche de polymère conducteur d'ions en contact avec ledit film électrochromique; et
   e. une contre-électrode formée d'une grille de cuivre en contact avec ladite couche de polymère conducteur d'ions,

   caractérisé en ce que la contre-électrode formée d'une grille de cuivre est revêtue d'un copolymère d'acide acrylamidopropane sulfonique et d'acide acrylique.

FIG.1

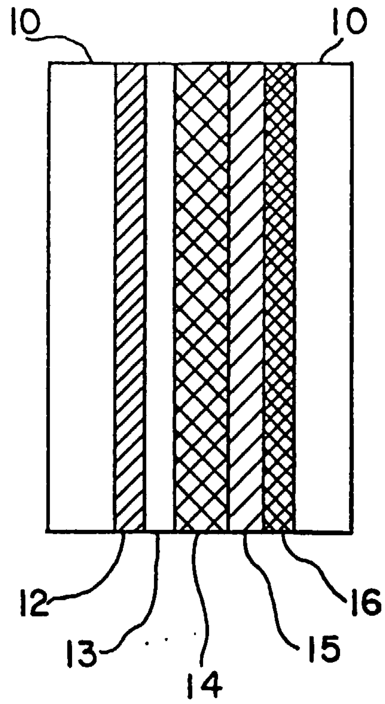


FIG.5

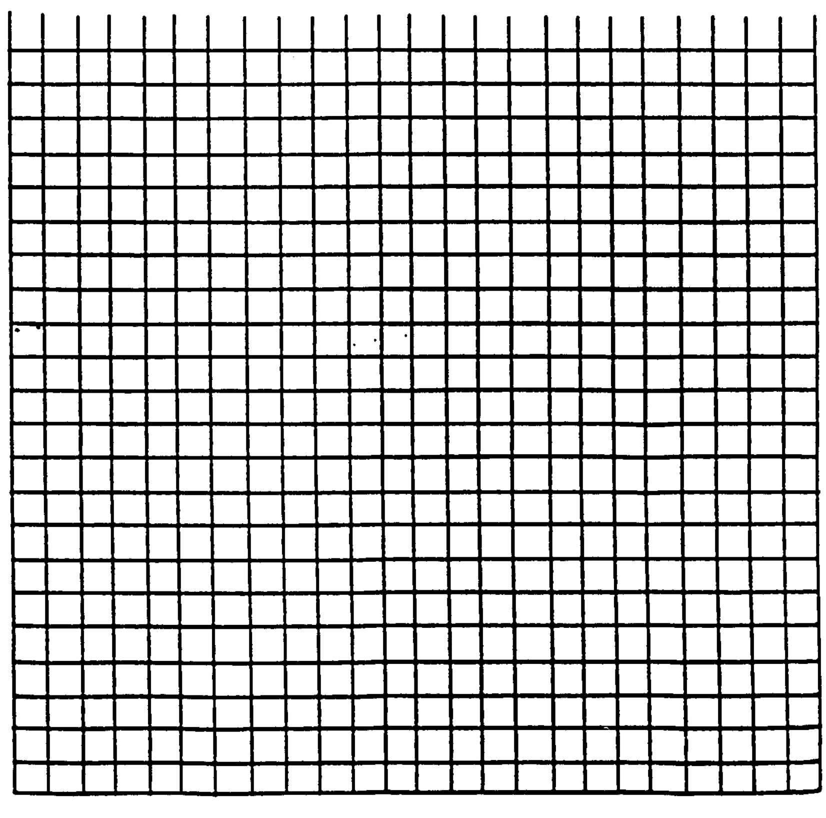

FIG. 2

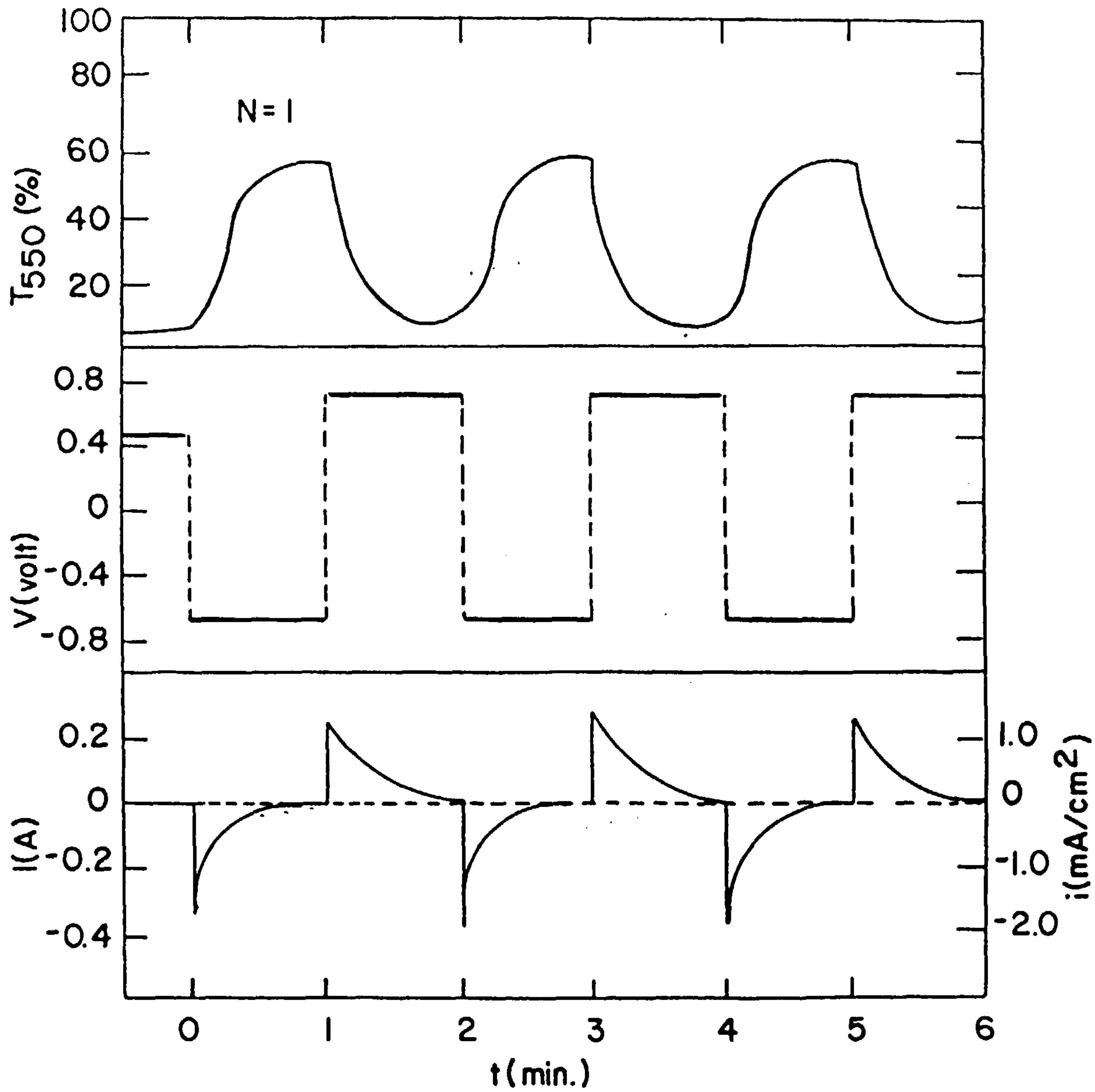
100
80
N = 1
60
40
20
$T_{550}$ (%)
0.8
0.4
0
-0.4
-0.8
V(volt)
0.2
0
-0.2
-0.4
I(A)
1.0
0
-1.0
-2.0
i(mA/cm$^2$)
0
1
2
3
4
5
6
t (min.)

FIG. 3

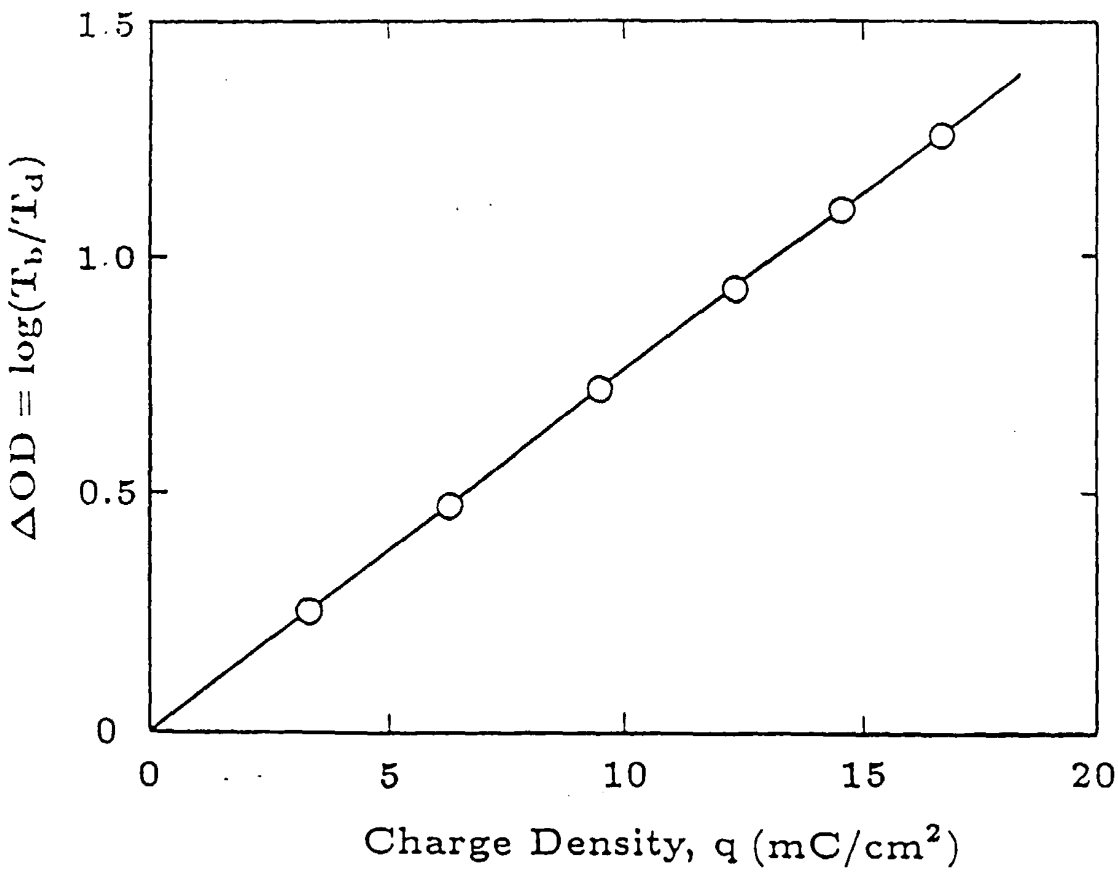

FIG. 4

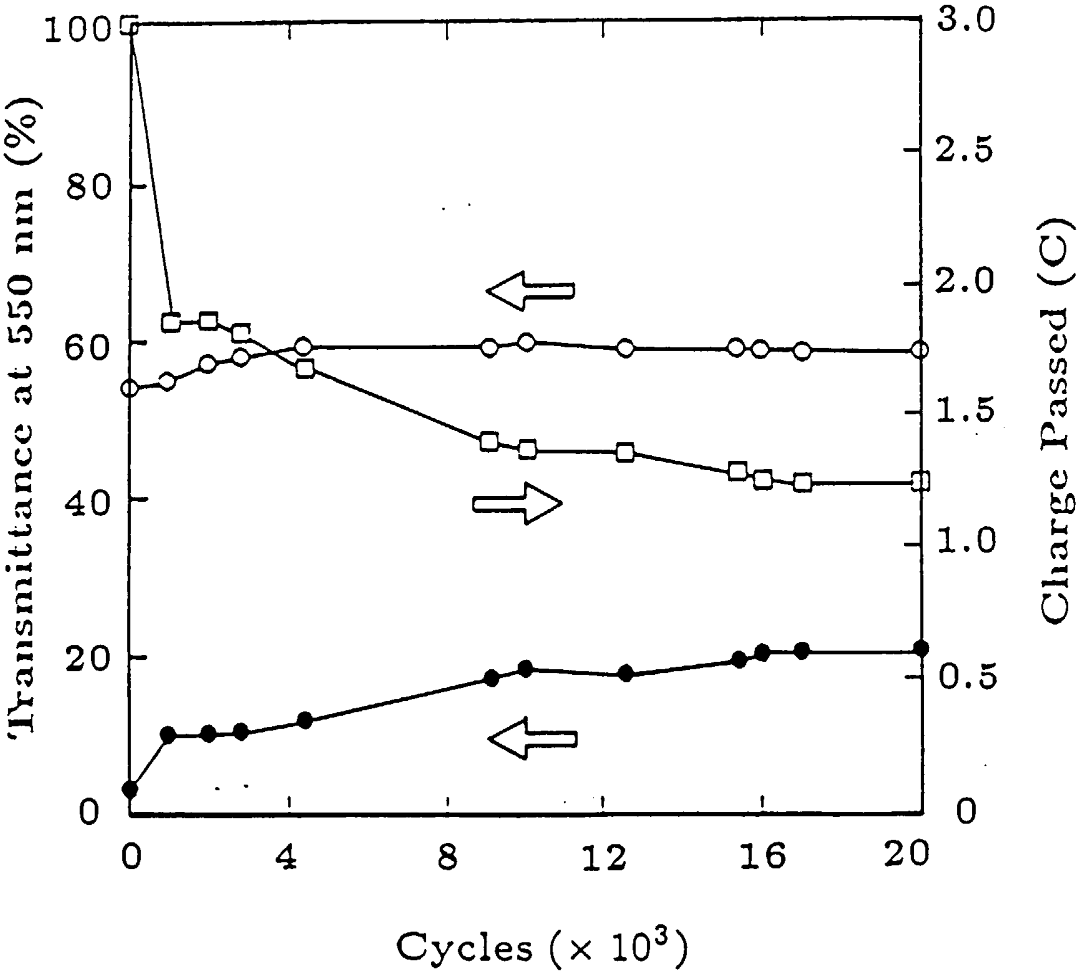
100
80
60
40
20
0
Transmittance at 550 nm (%)
3.0
2.5
2.0
1.5
1.0
0.5
0
Charge Passed (C)
0
4
8
12
16
20
Cycles (× 10³)

FIG. 6

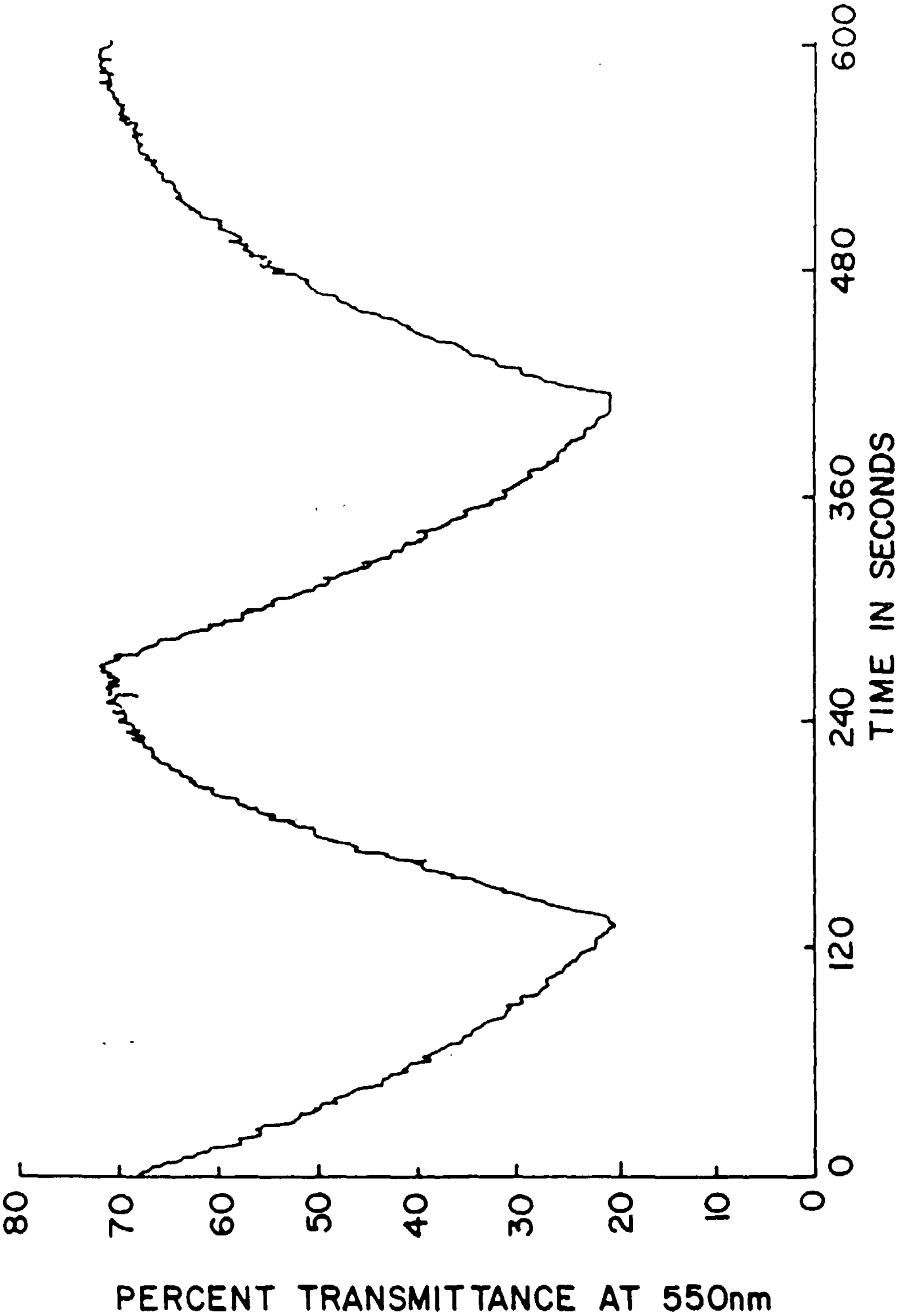
PERCENT TRANSMITTANCE AT 550nm
0
10
20
30
40
50
60
70
80
TIME IN SECONDS
0
120
240
360
480
600

FIG. 7

Switching Data for In HCF/PAAMPS/$WO_3$